# EUROPEAN PATENT APPLICATION

(11) **EP 4 700 510 A1**
(43) Date of publication of application: **25.02.2026**
(21) Application number: 24791744.6
(22) Date of filing: 29.02.2024
(51) Int. Cl.: G05B 19/4065

(54) **PRODUCTION METHOD AND PRODUCTION LINE FOR WORKPIECE MATERIAL-FLOW SYSTEM TO IMPLEMENT TOOL MATERIAL-FLOW EXCHANGE**

(30) Priority: 20.04.2023 CN 202310432210
(71) Applicant: Kede Numerical Control Co., Ltd., Dalian, Liaoning 116000 (CN)
(72) Inventor: YU, Benhong, Dalian, Liaoning 116000 (CN); JU, Zidan, Dalian, Liaoning 116000 (CN); NI, Changsheng, Dalian, Liaoning 116000 (CN); LIU, Shaoyi, Dalian, Liaoning 116000 (CN); HOU, Tianxiang, Dalian, Liaoning 116000 (CN); LIU, Xuejun, Dalian, Liaoning 116000 (CN); ZHANG, Jinlong, Dalian, Liaoning 116000 (CN); KONG, Xiangyuan, Dalian, Liaoning 116000 (CN); YANG, Xianglin, Dalian, Liaoning 116000 (CN); HUANG, Dawei, Dalian, Liaoning 116000 (CN); WANG, Renhou, Dalian, Liaoning 116000 (CN); SHA, Xingbin, Dalian, Liaoning 116000 (CN); XU, Zhengjin, Dalian, Liaoning 116000 (CN); JIANG, Yingchao, Dalian, Liaoning 116000 (CN); WANG, Chengjie, Dalian, Liaoning 116000 (CN); DING, Shuchun, Dalian, Liaoning 116000 (CN); YU, Jiang, Dalian, Liaoning 116000 (CN); ZHU, Lihua, Dalian, Liaoning 116000 (CN)
(74) Representative: JD&P Patent Attorneys Joanna Dargiewicz & Partners
(86) International application number: PCT/CN2024/079307
(87) International publication number: WO 2024/217156

(57) **Abstract**

The present invention provides a production method and a production line for implementing tool transfer exchange through a workpiece transfer system, as disclosed herein. The production method includes: mounting a load into a workpiece transfer pallet (1); inputting a physical attribute of the load and an information of the workpiece transfer pallet (1) into a production line management and control system; transfering the workpiece transfer pallet (1) to a target numerical control machine tool through the workpiece transfer system; transfering the load into the numerical control machine tool through an exchange mechanism; and the numerical control machine tool receiving the load and performing an operation of tool gripping or workpiece machining. By utilizing the workpiece transfer pallet (1) to support a tool carrier (2) and/or a workpiece, transfer the tool and/or the workpiece, and utilizing a spindle of the numerical control machine tool to grip the tool for tool changing, tool magazine replenishment, or direct machining, a single transfer system can be shared by both workpieces and tools, thereby enabling the transfer of workpieces and tools without the need to establish two separate transfer lines, significantly reducing production costs, decreasing occupation of layout space, and improving production efficiency.

## Description

### Technical Field

The present invention relates to the field of production line machining, and more particularly to a production method and a production line for implementing tool transfer exchange through a workpiece transfer system.

### Background Art

In current numerical control machine tool production lines, to achieve continuous machining, a workpiece transfer system is typically provided to transfer workpieces to be machined to the numerical control machine tool, and to remove finished workpieces from the numerical control machine tool. Meanwhile, due to a limited capacity of a built-in tool magazine of the numerical control machine tool, it is difficult to store all the required tools. Therefore, a tool transfer system is also needed to transfer tools from a central tool magazine to the numerical control machine tool to meet machining demands.

However, the simultaneous deployment of both the workpiece transfer system and the tool transfer system significantly increases production costs and occupies more layout space.

### Summary of Invention

To solve the above problem, the present invention provides a production method and a production line for implementing tool transfer exchange through a workpiece transfer system.

A production method for implementing tool transfer exchange through a workpiece transfer system includes the following steps:
S1: providing a workpiece transfer pallet, which is empty, in an operation preparation area of the workpiece transfer system, and mounting a load into the workpiece transfer pallet;
S2: inputting a physical attribute of the load and an information of the workpiece transfer pallet into a production line management and control system, the physical attribute of the load corresponding to a tool carrier or a workpiece;
S3: the production line management and control system issuing a control command, namely a workpiece transfer pallet transfer command, to the workpiece transfer system, to transfer the workpiece transfer pallet together with the load to a pallet exchange transfer position of a numerical control machine tool which is targeted; and issuing a control command to the numerical control machine tool to prepare the numerical control machine tool for receiving the workpiece transfer pallet;
S4: after the production line management and control system confirms that the load has been transferred to the pallet exchange transfer position, which is specified, of the numerical control machine tool which is targeted, the production line management and control system issuing a control command to an exchange mechanism to transfer the load into the numerical control machine tool, and issuing a control command to the numerical control machine tool;
S5: the numerical control machine tool receiving the load in accordance with the control command, and performing an operation of tool gripping or workpiece machining based on the control command; and
S6: after the operation is completed, the numerical control machine tool feeding back an information to the production line management and control system, which issues a control command to the workpiece transfer system to return the load into the workpiece transfer system through the exchange mechanism.

Further, in S4, when the production line management and control system confirms that the load has been transferred to the pallet exchange transfer position, which is specified, of the numerical control machine tool which is targeted, the production line management and control system issues a control command to the numerical control machine tool, so that the numerical control machine tool reads an information of the workpiece transfer pallet at the pallet exchange transfer position to perform a comparison with an information of the workpiece transfer pallet transmitted by the production line management and control system, and after the comparison is confirmed as correct, the numerical control machine tool feeds back a comparison information to the production line management and control system and opens a protective door of the numerical control machine tool to prepare for receiving a pallet, and
when the production line management and control system receives a signal fed back by the numerical control machine tool indicating that the comparison is correct, the production line management and control system issues a control command to the exchange mechanism to transfer the load into the numerical control machine tool and issues a control command to the numerical control machine tool to receive the load.

Further, in S5, after a spindle of the numerical control machine tool grips a tool, the spindle transfers one or more tools on the tool carrier into a tool magazine based on a command issued by the production line management and control system.

Further, in S5, after the spindle of the numerical control machine tool grips the tool, the spindle transfers one or more tools on the tool carrier into the tool magazine based on the command issued by the production line management and control system, and then withdraws one or more tools originally stored in the tool magazine and transfers the one or more tools originally stored in the tool magazine into the tool carrier.

Further, in S5, after a spindle of the numerical control machine tool grips a tool, the spindle prepares to machine a workpiece based on a command issued by the production line management and control system.

Further, in S3, the control command issued by the production line management and control system to the numerical control machine tool includes the physical attribute of the load, the information of the workpiece transfer pallet, and a corresponding operation,
when the load is the tool carrier, the corresponding operation includes transferring one or more tools on the tool carrier into the tool magazine through a spindle, or exchanging one or more tools on the tool carrier with one or more tools in the tool magazine or gripping a tool through the spindle, and
when the load is a workpiece, the corresponding operation includes fixing the workpiece and then machining the workpiece.

Further, after a spindle of the numerical control machine tool grips a tool, the spindle performs tool measurement through a tool setter, and when the tool setter is provided outside the numerical control machine tool, a tool information is transmitted to the numerical control machine tool.

Further, the workpiece transfer system includes the workpiece transfer pallet, the workpiece transfer pallet is provided with a zero-point positioning structure, a worktable of the numerical control machine tool is provided with a zero-point positioning system, and the zero-point positioning structure cooperates with the zero-point positioning system to connect the workpiece transfer pallet to the worktable of the numerical control machine tool.

Further, when the numerical control machine tool does not require a tool, the production line management and control system issues a control command to the workpiece transfer system to transfer a workpiece to the numerical control machine tool.

Further, the numerical control machine tool is a vertical numerical control machining center, and an axis of a tool in the tool carrier is in a vertical direction.

Further, the numerical control machine tool is a horizontal numerical control machining center, and an axis of a tool in the tool carrier is in a horizontal direction.

Further, the numerical control machine tool is a five-axis numerical control machining center, the load is the tool carrier, the tool carrier is transferred into the numerical control machine tool and mounted on a worktable of the numerical control machine tool, and
a posture of a spindle of the numerical control machine tool and a posture of the worktable of the numerical control machine tool are adjusted to align an axial direction of the spindle with an axial direction of a tool in the tool carrier.

A production line for implementing tool transfer exchange through a workpiece transfer system includes: a workpiece transfer system; a production line management and control system; and a numerical control machine tool, wherein
the workpiece transfer system includes a workpiece transfer pallet, which is configured to support a load and, based on a control command, transfer the load to a pallet exchange transfer position of the numerical control machine tool which is targeted, the load being a tool carrier or a workpiece, and the tool carrier being capable of carrying one or more tools,
the production line management and control system is configured to acquire a physical attribute of the load and an information of the workpiece transfer pallet, and based on the physical attribute, issue a control command set to respectively control the workpiece transfer system and the numerical control machine tool to perform corresponding operations according to control commands received, and
the numerical control machine tool is configured to perform an operation of tool gripping or workpiece machining based on a control command when the load reaches the pallet exchange transfer position of the numerical control machine tool which is targeted.

Further, the workpiece transfer pallet is a workpiece sub-plate, and a worktable of the numerical control machine tool is provided with a workpiece master plate configured to cooperate with the workpiece sub-plate.

Further, the workpiece transfer system includes an exchange mechanism, and the exchange mechanism is one of a pallet truck, a manipulator, a gantry robot, or an industrial robot.

Further, the tool carrier includes a body and a tool holder provided on the body, the tool holder has an opening, and the tool enters or leaves the tool holder through the opening.

Further, the numerical control machine tool has a spindle, the spindle includes a spindle shaft, and the spindle is configured to move along an axis of the spindle shaft to grip the tool, and withdraw the tool in a direction perpendicular to the axis of the spindle shaft to release the tool from the tool carrier.

Further, the numerical control machine tool includes a spindle, a tool turret, and a workpiece spindle, the workpiece spindle is connectable to the workpiece transfer pallet, and the spindle or the tool turret is configured to move toward the workpiece spindle in a direction perpendicular to an axis of the workpiece spindle to grip the tool, and move along the axis of the workpiece spindle to withdraw the tool and release the tool from the tool carrier.

Further, the tool carrier is provided with a pin hole, the workpiece sub-plate is provided with a positioning pin, the positioning pin passes through the pin hole, an end of the positioning pin has a locking hole, and a locking pin is provided in the locking hole to lock the tool carrier on the workpiece sub-plate.

In the present invention, the production method and the production line for implementing tool transfer exchange through the workpiece transfer system utilize the workpiece transfer pallet to support the tool carrier and/or the workpiece, transfer the tool and/or the workpiece, and utilize the spindle of the numerical control machine tool to grip the tool for tool changing, tool magazine replenishment, or direct machining. As such, a single transfer system can be shared by both workpieces and tools, thereby enabling the transfer of workpieces and tools without the need to establish two separate transfer lines, significantly reducing production costs, decreasing occupation of layout space, and improving production efficiency.

### Brief Description of Drawings

In order to illustrate the examples of the present invention or the technical solutions in the prior art more clearly, the following briefly introduces the accompanying drawings that need to be used in the description of the examples or the prior art. Obviously, the accompanying drawings in the following description are some examples of the present invention, and for a person skilled in the art, other drawings can also be obtained from these accompanying drawings without creative effort.
Fig. 1 is a flowchart illustrating a production method for implementing tool transfer exchange through a workpiece transfer system according to Example 1 of the present invention.
Fig. 2 is a structure schematic view illustrating a workpiece transfer pallet and a tool carrier according to Example 6 of the present invention.
Fig. 3 is a top view of the workpiece transfer pallet mounted with the tool carrier according to Example 6 of the present invention.
Fig. 4 is a structure schematic view illustrating a workpiece transfer pallet and a tool carrier according to Example 7 of the present invention.
Fig. 5 is a top view of the workpiece transfer pallet mounted with the tool carrier according to Example 7 of the present invention.
Fig. 6 is a schematic view illustrating movement of a production line for implementing tool transfer exchange through a workpiece transfer system according to Example 6 of the present invention.
Fig. 7 is a schematic view illustrating movement of a production line for implementing tool transfer exchange through a workpiece transfer system according to Example 7 of the present invention.
Fig. 8 is a schematic view illustrating movement of a production line for implementing tool transfer exchange through a workpiece transfer system according to Example 8 of the present invention.

In the drawings:1. Workpiece transfer pallet; 2. Tool carrier; 3. Pin hole; 4. Positioning pin; 5. Locking pin; 6. Pull stud; 7. Tool.

### Description of Embodiments

In order to make the purposes, technical solutions and advantages of the examples of the present invention clearer, the technical solutions in the examples of the present invention will be clearly and completely described below with reference to the accompanying drawings in the examples of the present invention. Obviously, the examples to be described are some, but not all, examples of the present invention. Based on the examples of the present invention, all other examples obtained by a person skilled in the art without creative efforts are within the protection scope of the present invention.

### Example 1

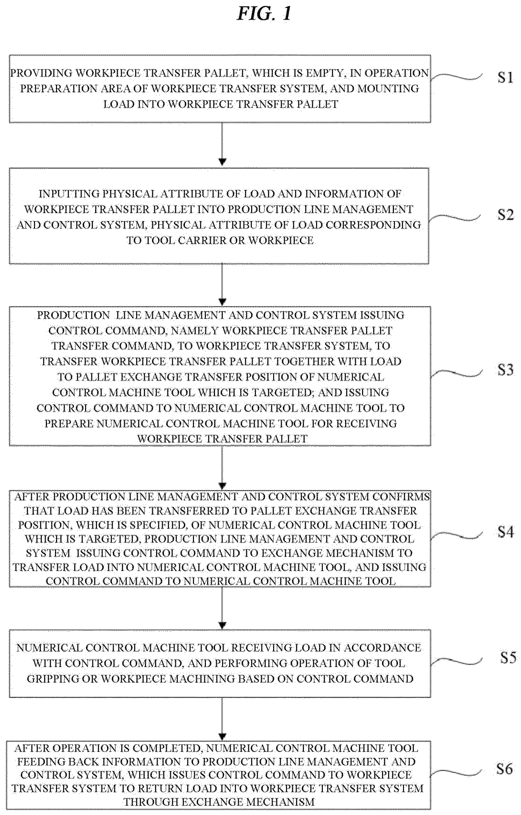

As illustrated in Fig. 1, the present example discloses a production method for implementing tool transfer exchange through a workpiece transfer system including the following steps:
S1: providing a workpiece transfer pallet, which is empty, in an operation preparation area of the workpiece transfer system, and mounting a load into the workpiece transfer pallet;
S2: inputting a physical attribute of the load and an information of the workpiece transfer pallet into a production line management and control system, the physical attribute of the load corresponding to a tool carrier or a workpiece;
S3: the production line management and control system issuing a control command, namely a workpiece transfer pallet transfer command, to the workpiece transfer system, to transfer the workpiece transfer pallet together with the load to a pallet exchange transfer position of a numerical control machine tool which is targeted; and issuing a control command to the numerical control machine tool to prepare the numerical control machine tool for receiving the workpiece transfer pallet;
S4: after the production line management and control system confirms that the load has been transferred to the specified position of the numerical control machine tool which is targeted, the production line management and control system issuing a control command to an exchange mechanism to transfer the load into the numerical control machine tool, and issuing a control command to the numerical control machine tool;
S5: the numerical control machine tool receiving the load in accordance with the control command, and performing an operation of tool gripping or workpiece machining based on the control command; and
S6: after the operation is completed, the numerical control machine tool feeding back an information to the production line management and control system, which issues a control command to the workpiece transfer system to return the load into the workpiece transfer system through the exchange mechanism.

The workpiece transfer system includes the workpiece transfer pallet, a movement unit, and the exchange mechanism. The movement unit is configured to drive the exchange mechanism to perform linear movement, and the exchange mechanism is configured to exchange a target object with the numerical control machine tool.

The workpiece transfer system further includes an operation preparation area. The operation preparation area is configured to load a target object such as a workpiece onto the workpiece transfer pallet and to load the workpiece transfer pallet onto the exchange mechanism. A pallet exchange transfer position refers to a position where the workpiece transfer pallet is located prior to the exchange of the target object between the exchange mechanism and the numerical control machine tool.

In the present example, the numerical control machine tool is a numerical control machining center that is equipped with its own tool magazine and is capable of automatic tool changing. During the machining process, when a required tool for machining is missing from the own tool magazine, it is necessary to call the tool from a central tool magazine. In the operation preparation area, an empty workpiece transfer pallet is provided as a standby pallet for transfer exchange. The tool required by the numerical control machine tool is mounted into the tool carrier, and the tool carrier is loaded into the empty workpiece transfer pallet. Then, the workpiece transfer pallet loaded with the tool carrier is mounted to the exchange mechanism.

The technical solution disclosed in the present example is also applicable to general numerical control machine tools. A tool is called from a central tool magazine, transferred via a workpiece transfer system, and transferred into a numerical control machine tool through an exchange mechanism, thereby enabling the numerical control machine tool to change the tool.

When the numerical control machine tool is in a normal machining state and no tool needs to be transferred, a workpiece to be machined can be loaded into a controlled workpiece transfer pallet in the operation preparation area.

The tool carrier is used as the load, and the physical attribute of the load as well as the information of the workpiece transfer pallet are input into the production line management and control system, so that the physical attribute of the load is associated with the information of the workpiece transfer pallet. The production line management and control system issues a control command to the workpiece transfer system, causing the movement unit to start operating and transfer the exchange mechanism to a position of a target numerical control machine tool, specifically, a pallet exchange transfer position of the target numerical control machine tool. At the same time, the production line management and control system issues a control command to the numerical control machine tool, informing the numerical control machine tool of the physical attribute of the load and the information of the workpiece transfer pallet, etc. Upon receiving the information, the numerical control machine tool prepares to receive the workpiece transfer pallet.

When the workpiece transfer pallet is transferred to the specified pallet exchange transfer position of the target numerical control machine tool, and when the production line management and control system confirms that the load has been transferred to the specified pallet exchange transfer position of the target numerical control machine tool, the production line management and control system issues a control command to the numerical control machine tool. After receiving the command, the numerical control machine tool reads the pallet information at the pallet exchange transfer position and compares it with the pallet information transmitted by the production line management and control system. After the comparison is confirmed as correct, the numerical control machine tool feeds back comparison information to the production line management and control system and opens the protective door of the numerical control machine tool to prepare for receiving the pallet.

When the production line management and control system receives a signal fed back by the numerical control machine tool indicating that the comparison is correct, the production line management and control system issues a control command to the exchange mechanism to transfer the load into the numerical control machine tool and issues a control command to the numerical control machine tool to receive the load.

The exchange mechanism transfers the workpiece transfer pallet into the numerical control machine tool, and the numerical control machine tool directly grips the tool from the tool carrier based on the control command from the production line management and control system.

After completing the tool gripping operation, the numerical control machine tool feeds back information to the production line management and control system. The production line management and control system issues a control command to the workpiece transfer system, and the exchange mechanism takes the workpiece transfer pallet out of the numerical control machine tool and returns it to the workpiece transfer system.

After the spindle of the numerical control machine tool grips the tool, the spindle prepares to machine a workpiece based on a command issued by the production line management and control system. That is, the spindle of the numerical control machine tool grips the tool and enters a machining-ready state, where the gripped tool is the tool required for the next machining operation. The production line management and control system may assign a workpiece to be machined to enter the numerical control machine tool and begin machining.

In S3, the control command issued by the production line management and control system to the numerical control machine tool includes the physical attribute of the load, the information of the workpiece transfer pallet, and a corresponding operation,

In the present example, the load is the tool carrier, the corresponding operation includes gripping the tool.

When the load is a workpiece, the corresponding operation includes fixing the workpiece and then machining the workpiece.

In the present example, after a spindle of the numerical control machine tool grips a tool, the spindle performs tool measurement through a tool setter of the numerical control machine tool, and when the tool setter is provided outside the numerical control machine tool, a tool information is transmitted to the numerical control machine tool.

In the present example, the workpiece transfer pallet is provided with a zero-point positioning structure, the zero-point positioning structure being a pull stud. A workpiece master plate is provided on the worktable of the numerical control machine tool, and the workpiece master plate is provided with a zero-point positioning system. The zero-point positioning structure cooperates with the zero-point positioning system to connect the workpiece transfer pallet to the worktable of the numerical control machine tool. A zero-point positioning system is disclosed in Chinese Patent CN114131377A titled "Automated Zero-Point Positioning System and Workpiece Master Plate", and its specific structure and working principle will not be described in detail here. The workpiece master plate is provided on the worktable of the numerical control machine tool. Through the zero-point positioning system, the workpiece master plate is positioned on and connected to the workpiece transfer pallet. The numerical control machine tool mounts the workpiece master plate onto the worktable based on a command issued by the production line management and control system.

When the numerical control machine tool does not require a tool, the production line management and control system issues a control command to the workpiece transfer system to transfer a workpiece to the numerical control machine tool. At this time, the load is a workpiece, and in S3, the corresponding operation includes fixing the workpiece and then machining the workpiece.

In the present example, the numerical control machine tool is a vertical numerical control machining center or a vertical numerical control machine tool, and an axis of a tool in the tool carrier is in a vertical direction.

The spindle of the vertical numerical control machining center or the vertical numerical control machine tool is in a vertical direction. The tool carrier includes a body and a tool holder provided on the body, the tool holder has an opening, and the tool enters or leaves the tool holder through the opening. A housing space for housing tools is provided in a middle portion of the tool holder. A cross-sectional shape of the housing space is circular. A tool can enter the housing space through the opening. An axis of the housing space is in the vertical direction, and after the tool is loaded into the tool holder, an axial direction of the tool is aligned with the axial direction of the housing space. A plurality of tool holders is provided on the body of the tool carrier. The plurality of tool holders is arranged in a rectangular or circular shape and lies in the same plane. A space for tool entry and exit is reserved at the opening of each tool holder.

### Example 2

The present example differs from Example 1 in that, in the present example, the tool magazine of the numerical control machine tool requires tool replenishment.

After the spindle of the numerical control machine tool grips a tool, it transfers the tool into the tool magazine based on a command issued by the production line management and control system. When the tool carrier is mounted with a plurality of tools, the numerical control machine tool sequentially transfers the plurality of tools into the tool magazine based on a command issued by the production line management and control system.

In the present example, the load is the tool carrier. In S3, the corresponding operation includes transfering one or more tools from the tool carrier into the tool magazine with the spindle.

### Example 3

The present example differs from Example 2 in that, in the present example, the tool magazine of the numerical control machine tool requires tool exchange.

After the spindle of the numerical control machine tool grips a tool and transfers the tool into the tool magazine, the spindle of the numerical control machine tool grips a tool originally stored in the tool magazine from the tool magazine and loads the tool into the tool carrier. When a plurality of tools in the tool magazine needs to be exchanged, the numerical control machine tool, based on commands issued by the production line management and control system, sequentially takes the plurality of tools out of the tool magazine and loads them into the tool carrier.

In the present example, the load is the tool carrier. In S3, the corresponding operation includes exchanging one or more tools on the tool carrier with one or more tools in the tool magazine with the spindle, that is, loading the tools in the tool carrier into the tool magazine, and loading the tools originally stored in the tool magazine into the tool carrier.

### Example 4

The present example differs from Example 1 in that, in the present example, the numerical control machine tool is a horizontal numerical control machining center or a horizontal machine tool, and an axis of a tool in the tool carrier is in a horizontal direction. The tool carrier includes a plurality of layers of tool holders, with each layer being provided with a plurality of tool holders. The tool holders are arranged in a circular or rectangular shape, with the axes of the tool holders passing through the center of the circle or rectangle. The multilayer tool holder structure enables the tool carrier to have a large load capacity, allowing more tools to be transferred in a single operation.

### Example 5

The present example differs from Example 1 in that, in the present example, the numerical control machine tool is a five-axis numerical control machining center, the load is the tool carrier, the tool carrier is transferred into the numerical control machine tool and mounted on a worktable of the numerical control machine tool, and
a posture of a spindle of the numerical control machine tool and a posture of the worktable of the numerical control machine tool are adjusted to align an axial direction of the spindle with an axial direction of a tool in the tool carrier.

In the present example, the tool carrier may adopt the configuration of Example 3, Example 4, or other configurations. By adjusting the posture of the spindle and the posture of the worktable, the spindle is enabled to grip the tool. In the present example, the applicable structure of the tool carrier is more versatile, allowing adaptation to a wider variety of structural forms of tool carriers, without being limited by the arrangement direction of the tool holders.

### Example 6

The present example discloses a production line for implementing tool transfer exchange through a workpiece transfer system, which is configured to carry out a production method for implementing tool transfer exchange through the workpiece transfer system and includes a workpiece transfer system, a production line management and control system, and a numerical control machine tool.
the workpiece transfer system includes a workpiece transfer pallet 1, which is configured to support a load and, based on a control command, transfer the load to a position of the numerical control machine tool which is targeted, the load being a tool carrier 2 or a workpiece, and the tool carrier 2 being capable of carrying one or more tools 7,
the production line management and control system is configured to recognize a physical attribute of the load, and based on the physical attribute, issue a control command set to respectively control the workpiece transfer system and the numerical control machine tool to perform corresponding operations according to control commands received, and
the numerical control machine tool is configured to perform an operation of tool gripping or workpiece machining based on a control command when the load reaches the position of the numerical control machine tool which is targeted.

The production line management and control system is capable of obtaining the physical attribute of the load. By inputting the physical attribute of the load and the information of the workpiece transfer pallet 1 into the production line management and control system, the production line management and control system obtains information such as the physical attribute of the load.

In the present example, the workpiece transfer system includes the workpiece transfer pallet 1. The workpiece transfer pallet 1 is a workpiece sub-plate, and the workpiece sub-plate is provided with a pull stud 6. The worktable of the numerical control machine tool is provided with a workpiece master plate configured to cooperate with the workpiece sub-plate, wherein the workpiece master plate is capable of securing the pull stud 6 on the workpiece sub-plate. The workpiece transfer system further includes a movement unit and an exchange mechanism. The movement unit is configured to drive the exchange mechanism to perform linear movement, and the exchange mechanism is configured to exchange a target object with the numerical control machine tool. Specifically, the exchange mechanism is capable of transfering the target object into the numerical control machine tool or taking the target object out from the interior of the numerical control machine tool.

In the present example, the exchange mechanism is one of a pallet truck, a manipulator, a gantry robot, or an industrial robot.

In the present example, the tool carrier 2 includes a body and a tool holder provided on the body, the tool holder has an opening, and the tool 7 enters or leaves the tool holder through the opening.

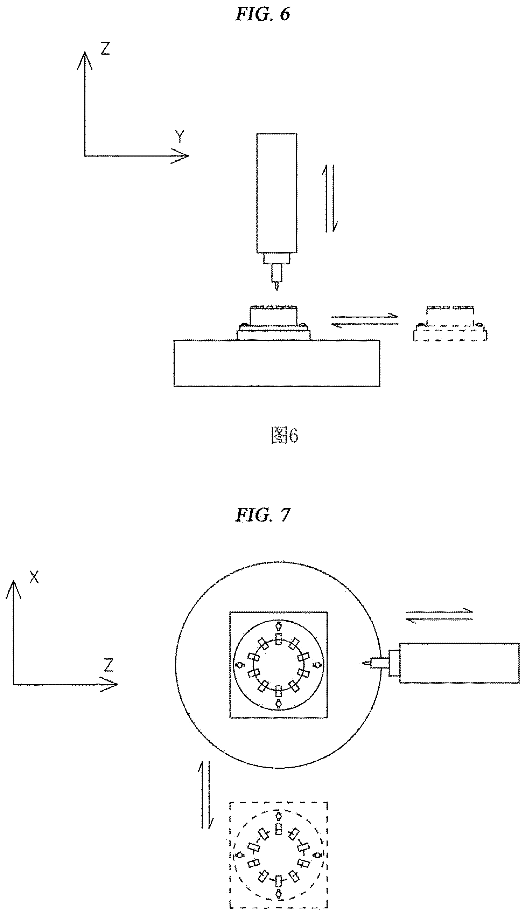

The tool carrier 2 may have various structural configurations adapted to different types of numerical control machine tools. As illustrated in Fig. 6, in the present example, the numerical control machine tool is a vertical numerical control machine tool. The tool carrier 2 is provided with a plurality of tool holders arranged in the same plane. A housing space for housing the tool 7 is provided in a middle portion of each tool holder. A cross-sectional shape of the housing space is circular, and the tool 7 can enter the housing space through the opening. An axis of the housing space is in the vertical direction, and after the tool 7 is loaded into the tool holder, an axial direction of the tool 7 is aligned with the axial direction of the housing space. The plurality of tool holders is arranged in a rectangular or circular shape. A space for entry and exit of the tool 7 is reserved at the opening of each tool holder. This structure of the tool carrier 2 is suitable for vertical numerical control machining centers or vertical numerical control machine tools, where the axis of the tool 7 in the tool carrier 2 is in the vertical direction and aligned with the direction of the spindle.

As illustrated in Fig. 6, in the present example, the workpiece transfer pallet 1 enters the numerical control machine tool in a Y-axis direction and is fixedly connected to the worktable. The spindle of the numerical control machine tool moves in a Z-axis direction to pick up the tool 7 and either transfers it into the tool magazine or prepares it for machining.

In the present example, the numerical control machine tool has a spindle, the spindle includes a spindle shaft, and the spindle is configured to move along an axis of the spindle shaft to grip the tool 7, and withdraw the tool 7 in a direction perpendicular to the axis of the spindle shaft to release the tool 7 from the tool carrier 2.

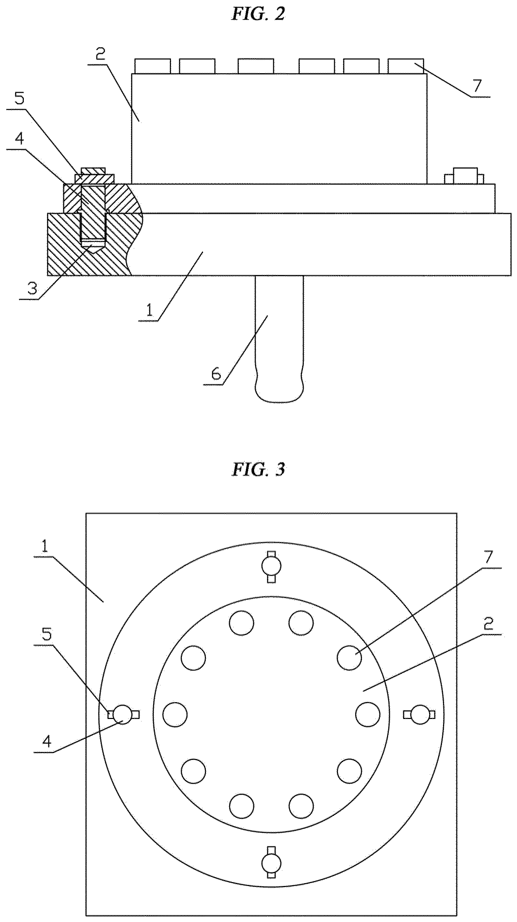

As illustrated in Figs. 2 and 3, the tool carrier 2 is fixedly connected to the workpiece transfer pallet 1, and in the present example, the tool carrier 2 is provided with a pin hole 3, the workpiece sub-plate is provided with a positioning pin 4, the positioning pin 4 passes through the pin hole 3, an end of the positioning pin 4 has a locking hole, and a locking pin 5 is provided in the locking hole to lock the tool carrier 2 on the workpiece sub-plate.

A length of the positioning pin 4 is greater than a length of the pin hole 3, and an end of the positioning pin 4 can protrude from the pin hole 3 so that the locking pin 5 can be inserted into the locking hole.

The tool carrier 2 and the workpiece transfer pallet 1 may also be fixed using other types of connections, such as bolt connection.

### Example 7

The present example differs from Example 6 in that, in the present example, the numerical control machine tool is a horizontal numerical control machine tool.

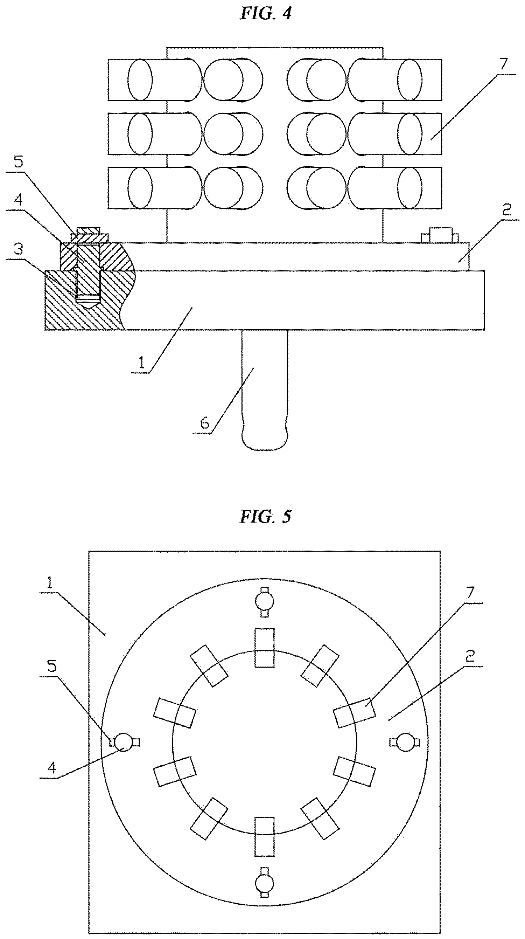

In the present example, as illustrated in Figs. 4 and 5, the tool carrier 2 is configured as a multilayer tool holder structure. Each layer is provided with a plurality of tool holders, each of which can be configured with the tool 7. The tool holders are arranged in a circular or rectangular shape, with the axes of the tool holders passing through the center of the circle or rectangle. The multilayer tool holder structure enables the tool carrier 2 to have a large load capacity, allowing more tools 7 to be transferred in a single operation.

As illustrated in Fig. 7, the workpiece transfer pallet 1 enters the numerical control machine tool in an X-axis direction and is fixedly connected to the worktable. The spindle of the numerical control machine tool moves in the Z-axis direction to pick up the tool 7 and either transfers it into the tool magazine or prepares it for machining.

### Example 8

The present example differs from Example 7 in that, in the present example, the numerical control machine tool is a horizontal turning and milling compound machining center.

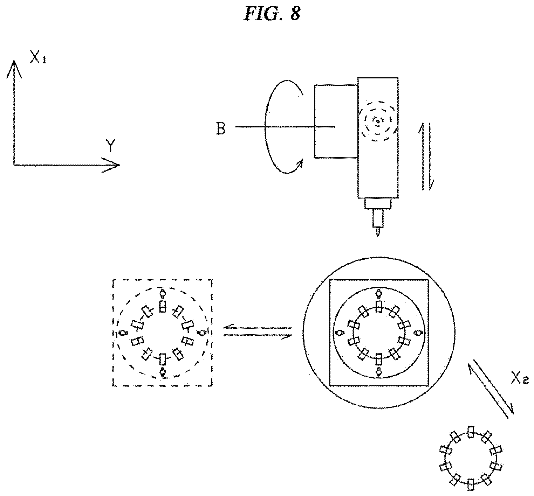

As illustrated in Fig. 8, the numerical control machine tool in the present example includes a spindle, a tool turret, and a workpiece spindle. The workpiece transfer pallet 1 is parallel to an X1-axis-Y-axis plane and enters the numerical control machine tool in the Y-axis direction, and is fixedly connected to the workpiece spindle. In the present example, the workpiece spindle is provided with a zero-point positioning system, and is fixedly connected to the workpiece transfer pallet 1 via the zero-point positioning system. The spindle of the numerical control machine tool is capable of moving along the X1-axis to grip the tool 7, and then either transferring it into the tool magazine or preparing it for machining.

In the present example, the tool turret is a servo-powered tool turret, which is capable of moving along an X2-axis. The workpiece spindle rotates to align the axis of the tool 7 on the tool carrier 2 with the rotational axis of the tool turret. The tool turret rotates to align the axis of a tool gripping mechanism on the tool turret with the axis of the tool 7. The tool turret moves along the X2-axis to grip the tool 7, and the workpiece spindle moves along the Z-axis to release the tool 7 from the tool carrier 2.

Finally, it should be noted that: the above examples are only used to illustrate the technical solutions of the present invention, but not to limit them; although the present invention has been described in detail with reference to the foregoing examples, a person skilled in the art should understand that: the technical solutions described in the foregoing examples can still be modified, or some or all of the technical features thereof can be equivalently substituted. However, these modifications or substitutions do not make the essence of the corresponding technical solutions deviate from the scope of the technical solutions of the examples of the present invention.

## Claims

1. A production method for implementing tool transfer exchange through a workpiece transfer system, the production method comprising:
S1: providing a workpiece transfer pallet, which is empty, in an operation preparation area of the workpiece transfer system, and mounting a load into the workpiece transfer pallet;
S2: inputting a physical attribute of the load and an information of the workpiece transfer pallet into a production line management and control system, the physical attribute of the load corresponding to a tool carrier or a workpiece;
S3: the production line management and control system issuing a control command, namely a workpiece transfer pallet transfer command, to the workpiece transfer system, to transfer the workpiece transfer pallet together with the load to a pallet exchange transfer position of a numerical control machine tool which is targeted; and issuing a control command to the numerical control machine tool to prepare the numerical control machine tool for receiving the workpiece transfer pallet;
S4: after the production line management and control system confirms that the load has been transferred to the pallet exchange transfer position, which is specified, of the numerical control machine tool which is targeted, the production line management and control system issuing a control command to an exchange mechanism to transfer the load into the numerical control machine tool, and issuing a control command to the numerical control machine tool;
S5: the numerical control machine tool receiving the load in accordance with the control command, and performing an operation of tool gripping or workpiece machining based on the control command; and
S6: after the operation is completed, the numerical control machine tool feeding back an information to the production line management and control system, which issues a control command to the workpiece transfer system to return the load into the workpiece transfer system through the exchange mechanism.

2. The production method according to claim 1, wherein
in S4, when the production line management and control system confirms that the load has been transferred to the pallet exchange transfer position, which is specified, of the numerical control machine tool which is targeted, the production line management and control system issues a control command to the numerical control machine tool, so that the numerical control machine tool reads an information of the workpiece transfer pallet at the pallet exchange transfer position to perform a comparison with an information of the workpiece transfer pallet transmitted by the production line management and control system, and after the comparison is confirmed as correct, the numerical control machine tool feeds back a comparison information to the production line management and control system and opens a protective door of the numerical control machine tool to prepare for receiving a pallet, and
when the production line management and control system receives a signal fed back by the numerical control machine tool indicating that the comparison is correct, the production line management and control system issues a control command to the exchange mechanism to transfer the load into the numerical control machine tool and issues a control command to the numerical control machine tool to receive the load.

3. The production method according to claim 1, wherein
in S5, after a spindle of the numerical control machine tool grips a tool, the spindle transfers one or more tools on the tool carrier into a tool magazine based on a command issued by the production line management and control system.

4. The production method according to claim 3, wherein
in S5, after the spindle of the numerical control machine tool grips the tool, the spindle transfers one or more tools on the tool carrier into the tool magazine based on the command issued by the production line management and control system, and then withdraws one or more tools originally stored in the tool magazine and transfers the one or more tools originally stored in the tool magazine into the tool carrier.

5. The production method according to claim 1, wherein
in S5, after a spindle of the numerical control machine tool grips a tool, the spindle prepares to machine a workpiece based on a command issued by the production line management and control system.

6. The production method according to claim 1, wherein
in S3, the control command issued by the production line management and control system to the numerical control machine tool includes the physical attribute of the load, the information of the workpiece transfer pallet, and a corresponding operation,
when the load is the tool carrier, the corresponding operation includes transferring one or more tools on the tool carrier into the tool magazine through a spindle, or exchanging one or more tools on the tool carrier with one or more tools in the tool magazine or gripping a tool through the spindle, and
when the load is a workpiece, the corresponding operation includes fixing the workpiece and then machining the workpiece.

7. The production method according to claim 1, wherein
after a spindle of the numerical control machine tool grips a tool, the spindle performs tool measurement through a tool setter, and when the tool setter is provided outside the numerical control machine tool, a tool information is transmitted to the numerical control machine tool.

8. The production method according to claim 1, wherein
the workpiece transfer system includes the workpiece transfer pallet, the workpiece transfer pallet is provided with a zero-point positioning structure, a worktable of the numerical control machine tool is provided with a zero-point positioning system, and the zero-point positioning structure cooperates with the zero-point positioning system to connect the workpiece transfer pallet to the worktable of the numerical control machine tool.

9. The production method according to claim 1, wherein
when the numerical control machine tool does not require a tool, the production line management and control system issues a control command to the workpiece transfer system to transfer a workpiece to the numerical control machine tool.

10. The production method according to claim 1, wherein
the numerical control machine tool is a vertical numerical control machining center, and an axis of a tool in the tool carrier is in a vertical direction.

11. The production method according to claim 1, wherein
the numerical control machine tool is a horizontal numerical control machining center, and an axis of a tool in the tool carrier is in a horizontal direction.

12. The production method according to claim 1, wherein
the numerical control machine tool is a five-axis numerical control machining center, the load is the tool carrier, the tool carrier is transferred into the numerical control machine tool and mounted on a worktable of the numerical control machine tool, and
a posture of a spindle of the numerical control machine tool and a posture of the worktable of the numerical control machine tool are adjusted to align an axial direction of the spindle with an axial direction of a tool in the tool carrier.

13. A production line for implementing the production method according to any one of claims 1 to 12 for implementing tool transfer exchange through a workpiece transfer system, the production line comprising:
a workpiece transfer system;
a production line management and control system; and
a numerical control machine tool, wherein
the workpiece transfer system includes a workpiece transfer pallet, which is configured to support a load and, based on a control command, transfer the load to a pallet exchange transfer position of the numerical control machine tool which is targeted, the load being a tool carrier or a workpiece, and the tool carrier being capable of carrying one or more tools,
the production line management and control system is configured to acquire a physical attribute of the load and an information of the workpiece transfer pallet, and based on the physical attribute, issue a control command set to respectively control the workpiece transfer system and the numerical control machine tool to perform corresponding operations according to control commands received, and
the numerical control machine tool is configured to perform an operation of tool gripping or workpiece machining based on a control command when the load reaches the pallet exchange transfer position of the numerical control machine tool which is targeted.

14. The production line according to claim 13, wherein
the workpiece transfer pallet is a workpiece sub-plate, and a worktable of the numerical control machine tool is provided with a workpiece master plate configured to cooperate with the workpiece sub-plate.

15. The production line according to claim 13, wherein
the workpiece transfer system includes an exchange mechanism, and the exchange mechanism is one of a pallet truck, a manipulator, a gantry robot, or an industrial robot.

16. The production line according to claim 13, wherein
the tool carrier includes a body and a tool holder provided on the body, the tool holder has an opening, and the tool enters or leaves the tool holder through the opening.

17. The production line according to claim 13, wherein
the numerical control machine tool has a spindle, the spindle includes a spindle shaft, and the spindle is configured to move along an axis of the spindle shaft to grip the tool, and withdraw the tool in a direction perpendicular to the axis of the spindle shaft to release the tool from the tool carrier.

18. The production line according to claim 13, wherein
the numerical control machine tool includes a spindle, a tool turret, and a workpiece spindle, the workpiece spindle is connectable to the workpiece transfer pallet, and the spindle or the tool turret is configured to move toward the workpiece spindle in a direction perpendicular to an axis of the workpiece spindle to grip the tool, and move along the axis of the workpiece spindle to withdraw the tool and release the tool from the tool carrier.

19. The production line according to claim 14, wherein
the tool carrier is provided with a pin hole, the workpiece sub-plate is provided with a positioning pin, the positioning pin passes through the pin hole, an end of the positioning pin has a locking hole, and a locking pin is provided in the locking hole to lock the tool carrier on the workpiece sub-plate.
